# EUROPEAN PATENT SPECIFICATION

(11) **EP 3 446 767 B1**
(45) Date of publication and mention of the grant of the patent: **25.10.2023**
(21) Application number: 17187741.8
(22) Date of filing: 24.08.2017
(51) Int. Cl.: B01D 46/62, B01D 46/64, B01D 46/00, B01D 46/121

(54) **COALESCENCE PREFILTER ELEMENT FOR A TURBINE FILTER CASSETTE AND COMBINATION FILTER COMPRISING SAME**
KOALESZENZVORFILTERELEMENT FÜR EINE TURBINENFILTERKASSETTE UND KOMBINATIONSFILTER DAMIT
ÉLÉMENT PRÉFILTRANT DE COALESCENCE POUR UNE CASSETTE DE FILTRE DE TURBINE ET COMBINAISON FILTRE LE COMPRENANT

(43) Date of publication of application: 27.02.2019
(73) Proprietor: W. L. Gore & Associates GmbH, 85640 Putzbrunn (DE); W. L. Gore & Associates, Inc., Newark, DE 19711 (US)
(72) Inventor: HUBER, Timon, 81377 München (DE); SEYBEL, Timo, 81829 München (DE); KIESELBACH, Michel, 85640 Putzbrunn (DE); POON, Wai Sing, Hockessin, DE Delaware 19707 (US); KUMAR, Saravana Karthik Ashok, 85640 Putzbrunn (DE)
(74) Representative: HGF

(56) References cited:
- WO-A1-2013/044960
- WO-A2-00/32295
- US-A- 4 358 372
- US-A- 4 971 612
- US-A- 5 800 584
- US-A1- 2004 011 202
- US-A1- 2013 019 578
- US-A1- 2014 190 137

## Description

The present invention relates to a coalescence prefilter element according to claim 1 and configured for attachment to a turbine filter cassette which comprises at least one sheet of coalescence filter material for arranging at an inlet of a turbine filter cassette. The invention further relates to a combination filter according to claim 8 and comprising such coalescence prefilter element and a turbine filter cassette comprising an inlet and an outlet for a fluid to be cleaned and a processing filter element arranged between the inlet and the outlet.

Air filters are used in various industrial applications, for example in connection with compressors and gas turbines. Liquid and solid particles contained in an air stream drawn into the turbine during operation of the turbine can cause damage to the downstream machines or adversely affect the processes. Ingestion of large amount of liquid and solid particles thus should be prevented.

It is known in the art to use so-called coalescence filters for the separation of oil and/or water aerosols. Coalescence filters typically have filter elements made of a relatively permeable fibre media through which the drawn air is cleaned. The oil or water aerosols strike the filter fibres where they would get caught and coalesce into larger drops that migrate downward due to gravity. The liquid accumulates in the lower portion of the filter element and eventually drip out of the filter or drains down on the surface.

Typically, the individual filter elements, i.e., coalescence filter element, processing filter element of the turbine filter cassette, etc., are integrated sequentially in the air supply line as separate components. As such, the filter elements are integrated separately in the air supply lines. For example, a coalescence filter element is provided as a flat filter in front of the entrance of a so-called V-panel filter which accommodates a plurality of processing filter elements arranged in such a way that adjacent processing filter elements each form a V in groups of two (e.g. GORE^{®} Hydrophobic HEPA V-Panel Filter for Gas Turbines of W. L. Gore & Associates, Inc.). For such an application, space in front of the entrance of the V-panel filter is not constrained and coalescence filter material with thickness of 20 mm or more are used. In addition, the coalescence filter material can be easily fixated at the edges of the V-panel filter.

On the other hand, for the arrangement of a plurality of individual V-shaped turbine filter cassettes (a filter cassette each comprising only two processing filter elements arranged in V-shape within a housing, e.g. Pulse Panel Filter (E12) for GORE^{®} Turbine Filters, W. L. Gore & Associates, Inc.) especially in a reverse pulse panel, such conventional coalescence filter materials are currently not used and appropriate, since the installation of any separate coalescence filter stage in the fluid stream to be cleaned requires more space due to the thick filter material installed in a separate stage in front of the entrance of each V-shaped turbine filter cassette within the panel arrangement, and increases maintenance costs. Furthermore, in dusty environment, the coalescence filters are blocked rapidly and require frequent replacement which interrupts the process and could lead to significant machine downtime and economic loss. In addition, there exists the problem that design and arrangement of such filter elements and filter cassettes in a practical application, such as in a turbine filter arrangement, are typically fixed and very tight, with only 10 mm space between two filter elements. Pulse-cleaning of the filter cassettes with compressed air to dislodge the collected dust poses another challenge.

US5800584 describes an oil separator for separating oil from air for delivery to a vehicle turbocharger, having cylindrical and concentric first and second coalescer elements within a housing. The cylindrical elements are sealed at one end by a flange which defines the air outlet, and at the other end by an end plate. US4358372 describes a fuel strainer for the inlet of a vehicle fuel tank. The strainer includes inner and outer socks each secured to a support ring.

It would thus be beneficial to provide an improved coalescence filter assembly for a turbine filter arrangement which is particularly compact, removable, applicable in reverse air applications, and does not require to change any existing design of turbine filter cassettes, particularly within a panel arrangement of a plurality of V-shaped turbine filter cassettes.

The invention relates to a coalescence prefilter element configured for attachment to a turbine filter cassette, and to a combination filter comprising such coalescence prefilter element according to the appended claims.

According to an aspect, there is provided a coalescence prefilter element configured for attachment to a turbine filter cassette, which comprises at least two sheets of coalescence filter material for arranging at an inlet of a turbine filter cassette, and a cover configured to be attached around at least a portion of the turbine filter cassette. The cover is formed by said at least two sheets of coalescence filter material and at least two sheets of connecting material, each arranged between the at least two sheets of coalescence filter material on opposite sides, to form a tube-like or bag-like envelope. The cover is configured to be imposed on and to be removably attached around said at least a portion of the turbine filter cassette.

According to another aspect, the invention relates to a combination filter, comprising a coalescence prefilter element as described herein, and a turbine filter cassette comprising an inlet and an outlet for a fluid to be cleaned and a processing filter element arranged between the inlet and the outlet. Said processing filter elements are often provided in form of pleated filter medium (so-called pleat packs), whereas the planar filter material is arranged in form of a plurality of pleats in order to increase filter media surface area while maintaining overall size of the cassette. The cover is imposed on and removably attached around at least a portion of the turbine filter cassette so that the at least one sheet of coalescence filter material covers at least part of the inlet of the turbine filter cassette.

Thus, with the present invention, it is possible to provide an improved filter assembly for a turbine filter arrangement which is compact in structure and does not need to change any existing design of turbine filter cassettes and any panel arrangements to which the filter cassettes are attached. The advantages of the present invention are particularly evident in connection with one or more V-shaped turbine filter cassettes, and a panel arrangement of a plurality of turbine filter cassettes. The invention particularly enables a combination of thinner coalescence filter material while fully covering the inlets of the filter cassettes and a new cover design comprising coalescence filter material as well as a connecting material such that imposing and tightening around at least a portion of a turbine filter cassette is enabled even in confined space environments. At the same time, the use of a separate connecting material, such as a textile, provides a solution for the tight spacing of the filter in the filter house and better mechanical characteristics regarding tensile strength, tightness and elasticity of the coalescence prefilter element than using a coalescence filter material with four sides all around the housing of the filter cassette.

According to an embodiment, the cover forms an envelope configured to be attached around said at least a portion of the turbine filter cassette. This facilitates imposing and tightening around a turbine filter cassette in confined spaces while still a thin coalescence material can be used.

An alternative cover (not according to the invention) is formed by at least two sheets of coalescence filter material and at least one sheet of connecting material arranged between the two sheets of coalescence filter material to form a bag-like envelope configured to be attached around said at least a portion of the turbine filter cassette. Another alternative cover (not according to the invention) is formed by at least one sheet of coalescence filter material and at least one sheet of connecting material to form a tube-like envelope configured to be attached around said at least a portion of the turbine filter cassette.

According to an embodiment, the sheet of connecting material comprises an elastic material configured to removably tighten the cover around said at least a portion of the turbine filter cassette. This facilitates the imposing on and, if necessary, the removing of the coalescence prefilter element from the filter cassette such that the coalescence prefilter element can be used once again, e.g. after cleaning it from any particles. Preferably, the at least one sheet of connecting material comprises a textile, which may have such elastic properties.

According to an embodiment, the coalescence prefilter element further comprises a fixation means which is configured to removably fix the cover around said at least a portion of the turbine filter cassette after the cover has been placed around the at least a portion of the turbine filter cassette. The fixation means may be formed as a thread, a line, rope, cord, press buttons, magnetic buttons, hook-and-loop fastener, barbed hooks connected to the filter cassette or the like. This may be preferable, for example, if the processing filter element of the turbine filter cassette needs to be cleaned at intervals, e.g. when a reverse pulse jet for removing particles is applied to the combination filter. Thus, the fixation means may also have the function of a retaining element which prevents slipping or shifting of the coalescence prefilter element from the filter cassette.

Preferably, the sheets of coalescence filter material have a thickness of not more than 10 mm, preferably not more than 6 mm according to ISO 9073-2.

According to an embodiment, the at least two sheets of connecting material are attached to the at least two sheets of coalescence filter material by a sewed seam, which is preferable in particular if the connecting material is or comprises a textile. Alternatively, the connecting material may be attached to the coalescence material by welding, glue or the like as well as by other mechanical means like hooks or the like.

In the combination filter according to an embodiment, the coalescence prefilter element and the processing filter element are preferably arranged such that the fluid to be cleaned sequentially flows through the sheets of coalescence filter material, enters the inlet of the turbine filter cassette, flows through the processing filter element, and exits the turbine filter cassette through the outlet.

In an embodiment, the processing filter element within the turbine filter cassette is implemented as a so-called Pulse Panel Filter element (available from W.L. Gore & Associates, Inc.). Such types of filter optimize power output of a turbine by eliminating performance reducing deposits in the compressor section. For example, the high H12/E12 filtration efficiency according to EN 1822:2009 keeps out a very high percentage of contaminants at the most penetrating particle size (~0.1 µm). This stops power losses while reducing fuel consumption and associated CO₂ and NOₓ emissions. Machine availability and reliability are also significantly increased because there is no need to stop the turbine for off-line compressor washing.

In a preferable implementation, the turbine filter cassette is V-shaped comprising two processing filter elements arranged within a housing, and the one or more inlets are arranged on at least one of the opposite sides of the V of the V-shaped filter cassette. The cover is arranged to cover at least part of the opposite sides of the V-shaped turbine filter cassette in the form of a bag-like or tube-like envelope. In this way, the coalescence filter material may effectively cover the one or more inlets of the filter cassette, while at the same time a thin coalescence filter material may be used which completely covers the one or more inlets of the filter cassette even in confined space environments.

According to an embodiment, the combination filter comprises a panel arrangement frame having a plurality of V-shaped turbine filter cassettes disposed thereon, wherein each of the turbine filter cassettes comprises at least one inlet which is arranged on at least one of the opposite sides of the V of the respective V-shaped filter cassette. The plurality of V-shaped turbine filter cassettes are arranged adjacent to one another with one of the sides of the V of a respective filter cassette facing one of the sides of the V of an adjacent filter cassette. For each of the turbine filter cassettes, the cover of a respective coalescence prefilter element is imposed on and removably attached around at least a portion of a respective turbine filter cassette in the form of a bag-like or tube-like envelope so that the at least one sheet of coalescence filter material covers at least part of the inlet of the respective turbine filter cassette. Accordingly, respective coalescence filter material may effectively cover each of the inlets of the assembled filter cassettes, while at the same time a thin coalescence filter material may be used in the confined space environments of such panel arrangement.

Further aspects and embodiments of the invention will now be described with respect to the accompanying drawings, in which
- Fig. 1: shows a coalescence prefilter element according to an embodiment of the invention,
- Fig. 2A, 2B: show a coalescence prefilter element according to an embodiment of the invention which is imposed on a portion of the turbine filter cassette according to an embodiment of the invention,
- Fig. 3A-3C: show a coalescence prefilter element according to a further embodiment of the invention,
- Fig. 4A, 4B: show a perspective view of a plurality of V-shaped combination filters according to an embodiment of the invention which are assembled on a panel arrangement frame for a plurality of V-shaped turbine filter cassettes according to an embodiment of the invention,
- Fig. 5: shows a perspective front view of a plurality of V-shaped combination filters according to an embodiment of the invention which are respectively assembled on a panel arrangement frame for a plurality of V-shaped turbine filter cassettes according to an embodiment of the invention,
- Fig. 6: shows a perspective front view of a plurality of V-shaped turbine filter cassettes without a coalescence prefilter element which are respectively assembled on a panel arrangement frame for a plurality of V-shaped turbine filter cassettes.

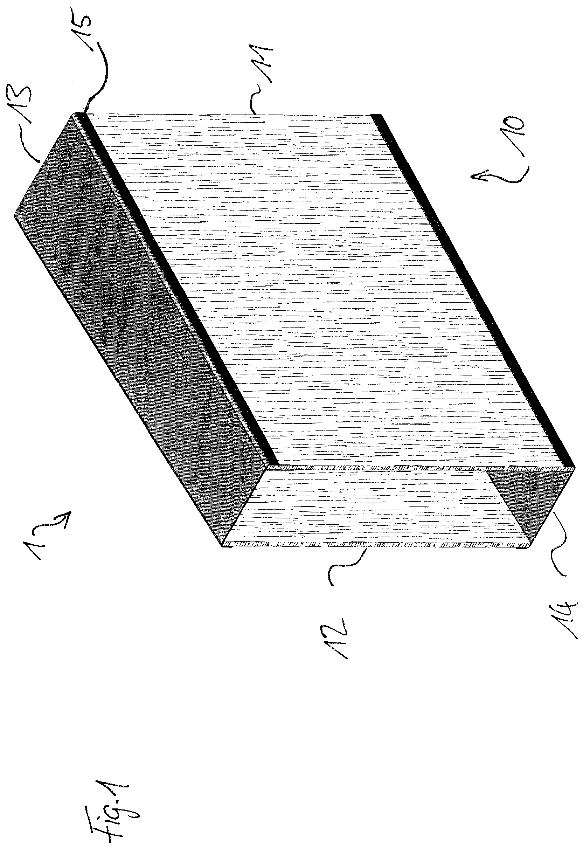

Fig. 1 shows a coalescence prefilter element according to an embodiment of the invention. The coalescence prefilter element 1 is particularly configured for attachment to a turbine filter cassette, as explained with respect to the following Figures herein below. The coalescence prefilter element 1 comprises, in the present embodiment, two sheets of coalescence filter material 11 and 12. Further, according to the present embodiment, two sheets of connecting material 13 and 14 are each arranged between the two sheets of coalescence filter material 11, 12 on opposite sides. Particularly, one of the connecting materials 13 is arranged on the top side of the two sheets of coalescence filter material 11 and 12 between them for connecting the sheets 11 and 12 with one another at the top side. Likewise, the other of the connecting materials 14 is arranged on the lower side of the two sheets of coalescence filter material 11 and 12 between them for connecting the sheets 11 and 12 with one another and the lower side. Thus, the sheets 13, 14 of connecting material and the sheets 11, 12 of coalescence filter material are forming a cover 10 which, in the present embodiment, forms a tube-like envelope which is configured to be imposed on and to be removably attached around at least a portion of a turbine filter cassette, as described in more detail below.

In order to further increase the stability of the tube-like envelope, another embodiment of the coalescence prefilter element further comprises a third connecting material (not shown in Fig. 1) bridging the two sheets of coalescence filter material 11, 12 at the front side of the envelope opposite the side designed to be imposed on a turbine filter cassette. Such a bridge will reduce the amount of air bypass when the coalescence prefilter element is imposed on and removably attached around at least a portion of a turbine filter cassette. Air bypassing the coalescence prefilter element is preferably minimized during operation of turbine filter cassette as well as during its cleaning by a reverse air pulse. Preferably, the third connecting material bridges at least 30 % of the opening formed by the two sheets of coalescence filter material 11, 12 and the two sheets of connecting material 13, 14.

As the coalescence filter material, in principle, any suitable coalescence material can be used which is appropriate for a turbine filter. Particularly, preferable physical and chemical characteristics of the coalescer material comprise at least one of the following: the coalescence material is synthetic, is made of an airlaid nonwoven, comprises polyester and/or polyolefin fibers, is hydrophobic, and/or is water repellent.

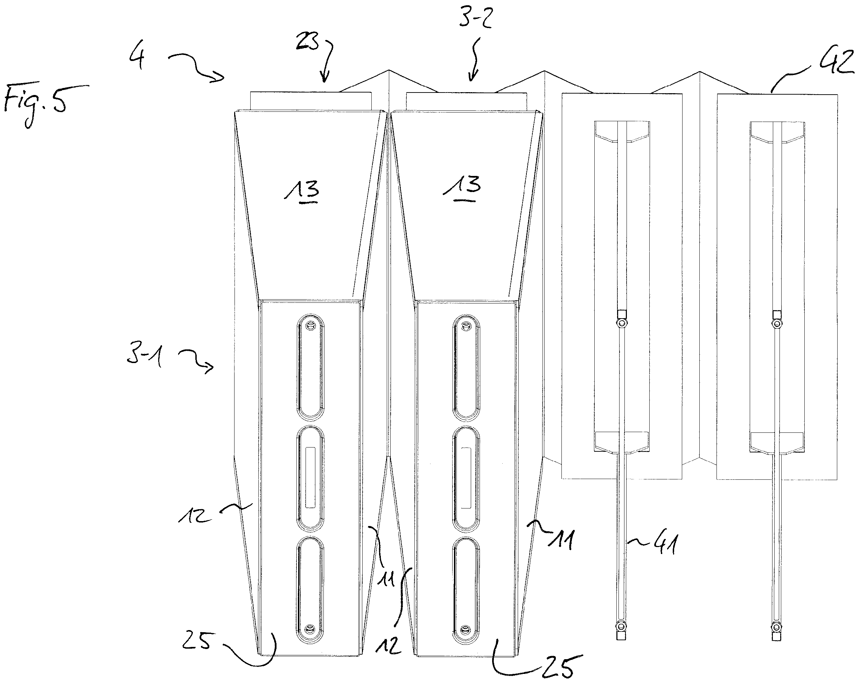

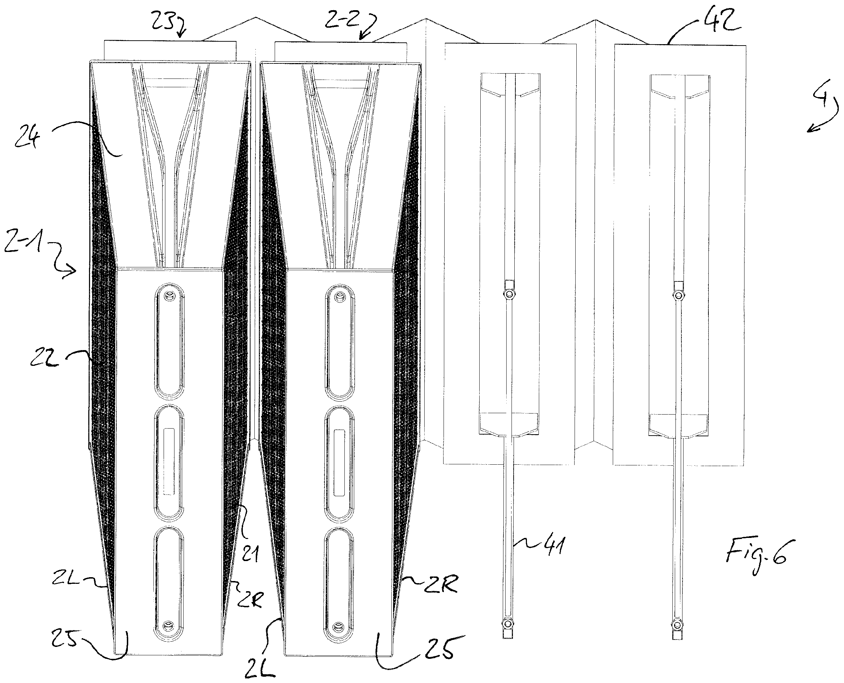

Preferably, the sheets 11, 12 of coalescence filter material each have a thickness of more than 1 mm but not more than 10 mm, preferably not more than 6 mm according to ISO 9073-2. Such thin coalescence materials have not yet been employed in connection with turbine filter cassettes, particularly of the design having a V-shape and assembled on a panel arrangement frame together with a plurality of V-shaped filter cassettes. Such thin coalescence material is advantageous with such arrangement, as discussed below in more detail with respect to Figures 5 and 6.

Further preferred characteristics of coalescence filter material, which may be employed in such coalescence prefilter element, are a basis weight of approx. 225 g/m², preferably not less than 150 g/m² and not more than 300 g/m² according to ISO 9073-1 and a filtration efficiency of at least G3, preferably of G4 according to EN779:2009.

The sheets of connecting material 13, 14 preferably each comprise a textile. Such textile is preferable with respect to elasticity and removability of the coalescence filter material from the filter cassette. The use of a separate connecting material, such as textile, provides better mechanical characteristics regarding tensile strength, tightness and elasticity of the coalescence prefilter element 1 than using a coalescence filter material at four sides all around the housing of the filter cassette. Generally, it is preferable that the sheet or sheets of connecting material 13, 14 each comprise an elastic material configured to removably tighten the cover 10 around at least a portion of the turbine filter cassette. The sheets of connecting material 13, 14 are preferably attached to the respective sheets of coalescence filter material 11, 12 by a respective sewed seam 15 on each of the two sides of the respective connecting material. Alternatively, the attachment can be obtained by welding, glue or the like as well as by other mechanical means like hooks or the like.

The smaller opening of the coalescence prefilter element 1 may be partially or fully closed to form a bag-like shape by joining connecting material 13 and 14, to prevent the reverse airstream during pulsing to escape between the coalescence filter material 11, 12 and the front side 25.

As the coalescence filter collects water or other fluids from the incoming air such that drops coalesce and roll down due to gravity and because in a filter house multiple filter cassettes are arranged on top of each other, the filter cassettes on the lower rows will be challenged with additional water coalesced by the filter cassettes above. As a consequence, the bottom row filter cassettes may become overloaded with water. This effect can be prevented by preferably using a water impermeable material for the connecting material 14 at the lower side of the coalescence filter. If the lower connecting material 14 is water impermeable, it acts as a drain to the front or the back of the filter cassette.

Other configurations of a coalescence prefilter element are also possible. For example, the cover 10 may be formed by at least two sheets of coalescence filter material 11, 12 and at least one sheet of connecting material (such as 14) arranged between the two sheets of coalescence filter material 11, 12 to form a bag-like envelope. According to another embodiment, the cover 10 may be formed by at least one sheet of coalescence filter material and at least one sheet of connecting material to form a tube-like envelope configured to be attached around at least a portion of a turbine filter cassette.

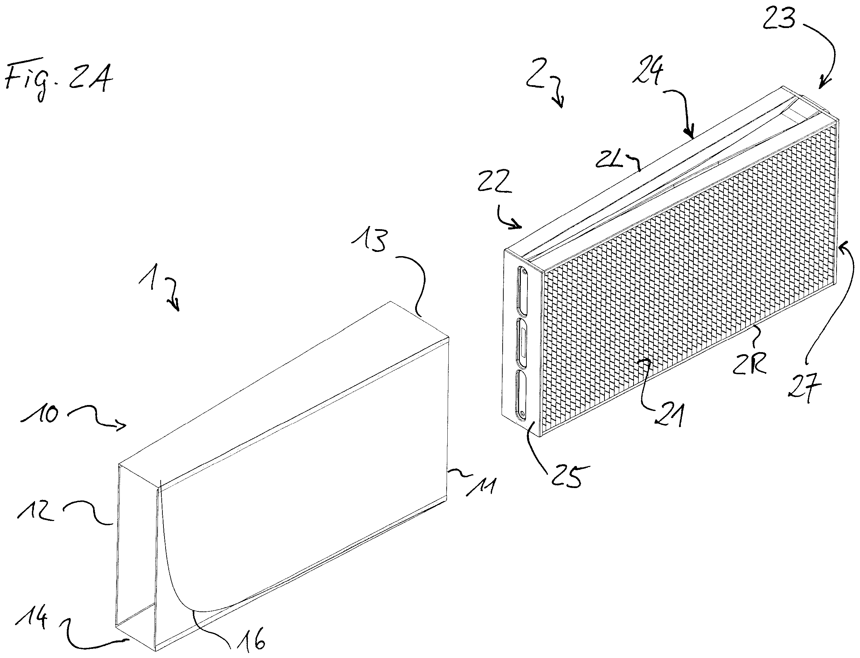

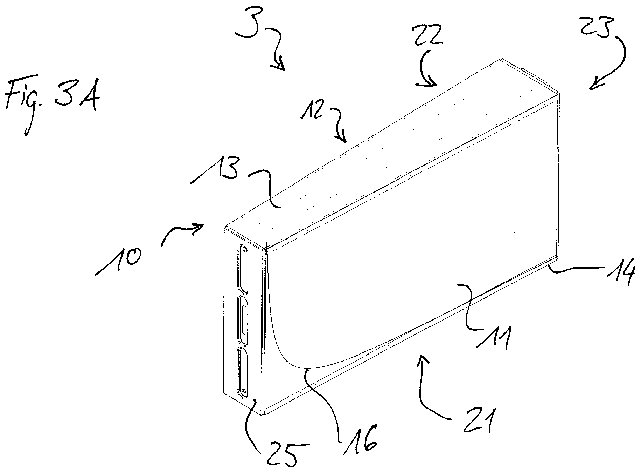

Fig. 2A shows a coalescence prefilter element 1 according to an embodiment of the invention before it will be imposed on a portion of a turbine filter cassette 2 according to an embodiment of the invention. In the present embodiment, the coalescence prefilter element 1 comprises a configuration as described above with respect to Fig. 1. In addition to the configurations as shown in Fig. 1, the embodiment according to Fig. 2A shows a coalescence prefilter element 1 which comprises a fixation means 16, such as a thread, press buttons, magnetic buttons, hook-and-loop fastener, barbed hooks connected to the filter cassette or the like, configured to removably fix the cover 10 around at least a portion of the turbine filter cassette 2 after the cover 10 has been placed around the turbine filter cassette, as explained in more detail in below Figures 3A-C.

The turbine filter cassette 2 in this embodiment comprises a housing 24, for example formed of metal, having a front side 25, a left side 2L and a right side 2R, and an outlet 23 formed on the opposite side of the front side 25. The turbine filter cassette 2 is V-shaped. Particularly, the left side 2L and right side 2R take the form of V such that the sides 2L, 2R form the opposite sides of the V-shaped turbine filter cassette 2. The housing 24 further includes a top side and a lower side for closing the housing at the top and underside.

In the present embodiment, an inlet 21, 22 of the filter cassette 2 for a fluid to be cleaned is respectively arranged on the sides 2L and 2R, i.e. on the opposite sides of the V-shaped filter cassette. The cleaned fluid exits the filter cassette 2 on its outlet 23 in the longitudinal direction of the housing 24. The fluid to be cleaned may enter the inlets 21, 22 also in the longitudinal direction, or in transverse direction of the housing 24, depending on the particular implementation. Processing filter elements 27, 28 (whereas element 28 is not explicitly shown) are arranged within the housing 24 between the inlets 21, 22 and the outlet 23, such that the fluid to be cleaned enters the inlets 21, 22, flows through the processing filter element 27, and exits the turbine filter cassette 2 through the outlet 23. For example, the filter cassette 2 is implemented as a Pulse Panel Filter element (available from W.L. Gore & Associates, Inc.), also known as ASC (augmented self cleaning) filter.

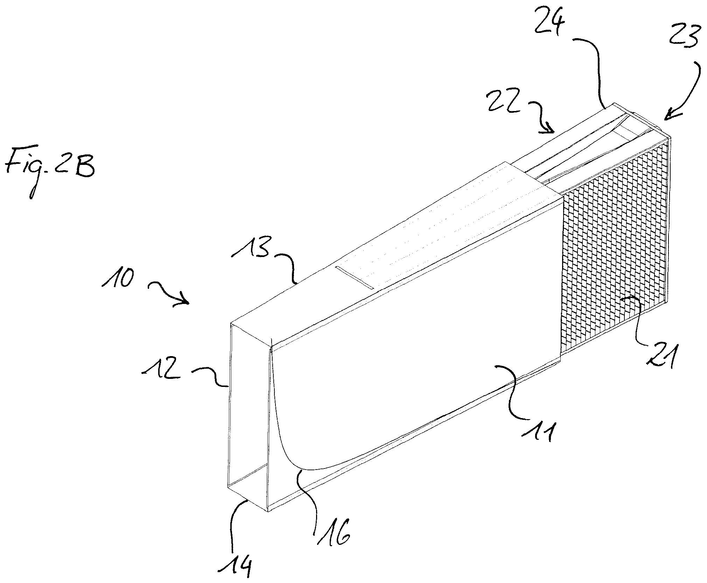

Fig. 2B shows the coalescence prefilter element 1 which is being imposed on the turbine filter cassette 2. Particularly, the cover 10 forms an envelope which has substantially the same V-shape as the filter cassette 2, thus comprises a shape complementary to the filter cassette 2. The form and material of the cover 10, particularly of the connecting material 13, 14 is designed for smoothly attaching the cover 10 around the turbine filter cassette 2, preferably without any hollow space formation and/or wrinkles between the housing 24 and the cover 10. At the end of the put-over process, the cover 10 is imposed on and removably attached around the housing 24 of the turbine filter cassette 2, so that the sheets of coalescence filter material 11, 12 cover at least part of the inlets 21, 22. That is, in the present embodiment, the cover 10 covers the opposite sides 2L, 2R of the V-shaped turbine filter cassette 2 in the form of a bag-like or tube-like envelope. Preferably, the sheets of coalescence filter material 11, 12 cover at least a portion of 60%, more than 90% or most preferably the entire surface of the inlets 21, 22 of the processing filter elements 27, 28.

In another embodiment (for example, if the housing 24 of the filter cassette 2 has a different shape), additional or alternative coalescence filter material may be arranged to additionally, or alternatively, cover the outlet 23 of the turbine filter cassette 2. In such arrangement, the envelope formed by the cover 10 may be closed at the side of the outlet 23.

Fig. 3A shows the coalescence prefilter element 1 finally imposed on the housing 24 of the turbine filter cassette 2. The cover 10 is imposed on and removably attached around the housing 24 of the turbine filter cassette 2, so that the sheets of coalescence filter material 11, 12 cover the inlets 21, 22 on the opposite sides of the V-shaped housing 24. The arrangement of coalescence prefilter element 1 and turbine filter cassette 2 thus forms a combination filter 3 employing two filter elements, namely the coalescence prefilter element 1 and the processing filter elements 27, 28. As described above, a fixation means 16, such as a thread, a line, rope, cord, a press button, a screw, magnetic buttons, hook-and-loop fastener, barbed hooks connected to filter cassette or the like, may be provided to removably fix the cover 10 around the turbine filter cassette 2 after the cover 10 has been placed around the housing. Preferably, the coalescence prefilter element 1 is constructed to be flush with the housing 24 of the filter cassette 2, and thus is seated on the filter cassette 2 quite tightly without the need to provide any additional fixation means. However, if the processing filter elements 27, 28 needs to be cleaned at intervals by a reverse air pulse, for example from particles, like sand, which may be contained in the air stream drawn into the filter, then there may be a problem that the coalescence prefilter element 1 (or cover 10, respectively) may be pushed from the filter cassette 2(e.g. applied from the right in the depiction of Fig. 3A-3C). Thus, the fixation means 16 may primarily have the function of a retaining element which prevents slipping or shifting of the coalescence prefilter element from the filter cassette 2 during cleaning (e.g. prevents slipping or shifting of the coalescence prefilter element to the left in the depiction of Fig. 3A-3C).

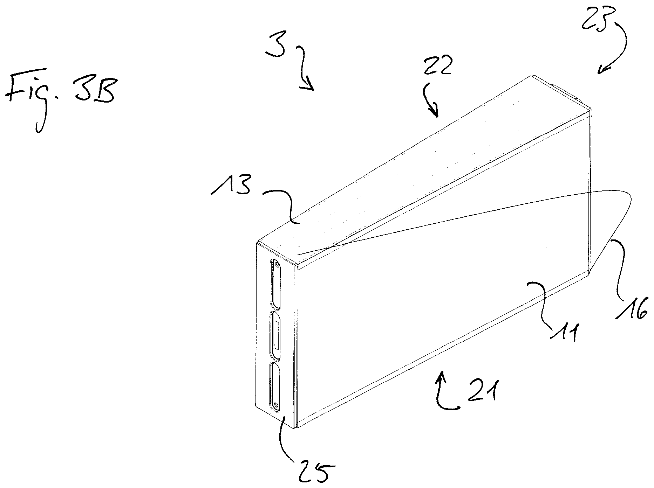

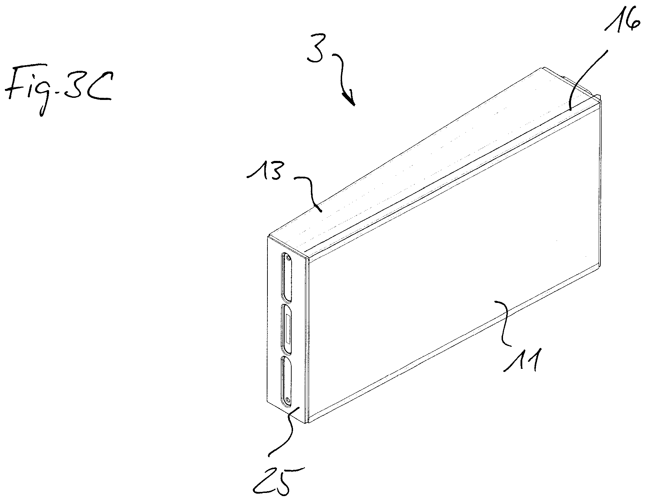

As shown in Figs. 3A-3C, a thread-like fixation means or retaining element 16 may be fixed at the lower right corner of the coalescence prefilter element close to the outlet 23, e.g. at the connecting material 14, which has a greater tensile strength for supporting the coalescence prefilter element 1 on the filter cassette 2. The loose end of the thread 16 may then be taken and disposed around the upper right corner of the coalescence prefilter element (Fig. 3B) close to the outlet 23 and pulled tight along the longitudinal direction and fixed at the upper left corner of the coalescence prefilter element or housing of the filter cassette (Fig. 3C) close to the front side 25.

As described before, in order to further increase the stability of the tube-like envelope imposed on the housing 24 of the turbine filter cassette 2, another embodiment of the coalescence prefilter element further comprises a third connecting material (not shown in Fig. 3A- 3C) bridging the two sheets of coalescence filter material 11, 12 at the front side 25 of the filter cassette. Preferably, the third connecting material bridges at least 30 % of the front side 25 of the filter cassette.

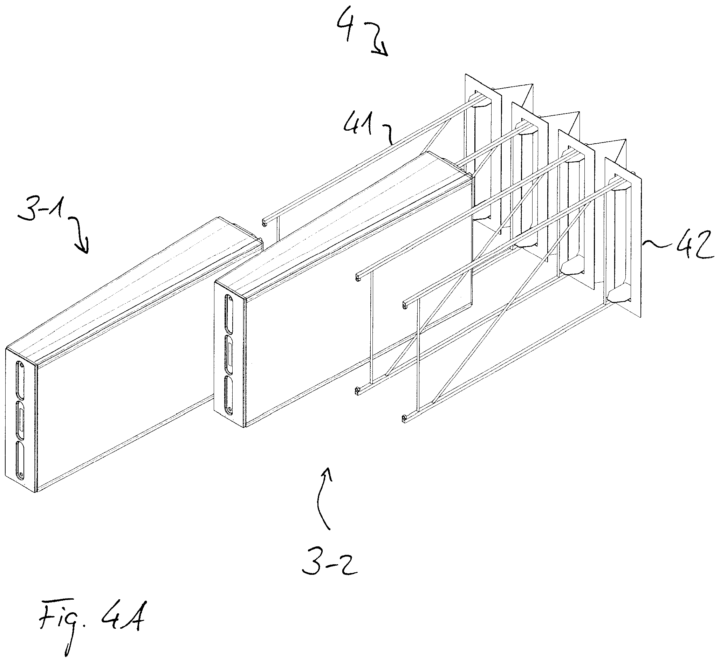

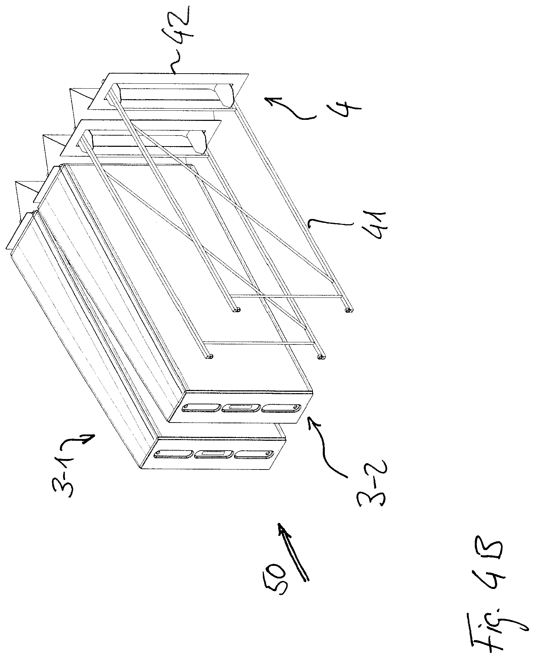

Fig. 4A and 4B each show, according to an embodiment of the invention, a perspective view of a plurality of V-shaped combination filters 3-1, 3-2 which are assembled on an exemplary panel arrangement frame 4 for a plurality of V-shaped turbine filter cassettes. Each of the plurality of V-shaped combination filters 3-1, 3-2 may have the configuration of a combination filter 3 having a coalescence prefilter element 1 and a turbine filter cassette 2 in an arrangement and structure as described above with respect to Figures 1 to 3. The panel arrangement frame 4 is structured for accommodating a plurality of V-shaped turbine filter cassettes 2. According to an embodiment, it comprises one or more columns or support pillars 41 which receive the respective filter cassettes and support them for attachment to the panel filter wall 42, the plane of which is perpendicular to the longitudinal direction of the columns or support pillars 41, e.g., by inserting the columns or support pillars 41 through the respective outlet 23 into the inner space of the filter cassette 2 for supporting the housing thereof at the panel filter wall 42.

As shown in Fig. 4B, in a final arrangement, the combination filters 3-1, 3-2 are arranged adjacent to one another in a row-like fashion with one of the sides 2L, 2R of the V of a respective filter cassette, such as filter cassette 2-1, facing one of the sides 2L, 2R of the V of an adjacent filter cassette 2-2. The structure of the filter cassettes 2-1, 2-2 correspond to the structure of the filter cassette 2 as described herein above with respect to Figures 1 to 3. The filter cassette 2 forms a single V and is only mounted in one direction, wherein the apex of the V is facing the upstream flow direction of the fluid flow 50 to be cleaned.

Fig. 5 shows a side view of a plurality of V-shaped combination filters 3 according to an embodiment of the invention which are respectively assembled on the panel arrangement frame 4, whereas Fig. 6 shows a side view of a plurality of V-shaped turbine filter cassettes 2 which are respectively assembled on the panel arrangement frame 4 without a coalescence prefilter element 1 placed thereon.

As shown in Fig. 6, filter cassettes 2-1, 2-2 are arranged side-by-side and adjacent to one another with the right side 2R of the V of the filter cassette 2-1 facing the left side 2L of the V of the adjacent filter cassette 2-2. The filter cassettes 2-1, 2-2 may be arranged such that the sides 2R and 2L are at a close distance or even flush mounted with respect to one another. In the arrangement of Fig. 6, the inlets 21, 22 are not covered by a respective coalescence filter material 11, 12. Any fluid stream, such as an air stream 50 (cf. Fig. 4B), which may come from the front, may enter the inlets 21, 22 unfiltered of any oil aerosols, particles or water vapor and, thus, may enter the processing filter elements 27, 28 within the housing 24 unfiltered.

As shown in Fig. 5 versus the arrangement of Fig. 6, the invention advantageously provides a respective coalescence prefilter element 1 on each of the filter cassettes 2-1, 2-2, wherein the cover 10 of a respective coalescence prefilter element 1 is imposed on and removably attached around the housing of the respective filter cassette 2-1, 2-2. Advantageously, since the cover 10 is structured to be in the form of a bag-like or tube-like envelope, so that the respective sheet of coalescence filter material 11, 12 covers the inlets 21 and 22, the air stream 50 may be filtered before entering into the processing filters. Particularly, the air stream 50 sequentially flows through the sheet of coalescence filter material 11, 12, enters the inlet 21, 22 of the respective turbine filter cassette 2-1, 2-2, flows through the processing filter elements 27, 28, and exits the respective filter cassette 2-1, 2-2 through the outlet 23. The invention makes it possible that, despite that design and arrangement of panel arrangement frame 4 and the filter cassettes 2 are typically fixed and very tight and closely spaced (see the close arrangement of sides 2L and 2R of two adjacent filter cassettes 2-1, 2-2 in the arrangement of Fig. 6, whereas the closest gap between the respective turbine filter cassette 2-1 and 2-2 can be as small as only 10 mm), coalescence filter material may be arranged upstream so as to supply the processing filter elements 27, 28 of the turbine filter cassette with a filtered fluid stream. The invention advantageously employs thin coalescence filter material 11, 12 which may be drawn over the respective filter cassette 2-1, 2-2 and fits into the narrow space between two adjacent filter cassettes placed on the panel arrangement frame 4 (cf. Fig. 6), but nevertheless reliably covers the surface of the inlets 21, 22 of the processing filter elements 27, 28 by at least a portion of 60%, preferably by more than 90% or covers the entire surface of the inlets 21, 22 of the processing filter elements 27, 28.

Thus, with the present invention, it is possible to provide an improved filter assembly for a turbine filter arrangement which is compact and does not need to change any existing design of the panel arrangement frame 4 and the turbine filter cassettes 2-1, 2-2 arranged thereon.

## Claims

1. A coalescence prefilter element (1) configured for attachment to a turbine filter cassette (2), comprising
- at least two sheets of coalescence filter material (11, 12) for arranging at an inlet (21, 22) of a turbine filter cassette (2), and
- a cover (10) configured to be attached around at least a portion of the turbine filter cassette, wherein the cover (10) is formed by said at least two sheets of coalescence filter material (11, 12) and at least two sheets of a separate connecting material (13, 14), each arranged between the at least two sheets of coalescence filter material (11, 12) on opposite sides, to form a tube-like or bag-like envelope,
- wherein said cover (10) is configured to be imposed on and to be removably attached around said at least a portion of the turbine filter cassette (2).

2. The coalescence prefilter element (1) according to claim 1, wherein each said sheet of connecting material (13, 14) comprises an elastic material configured to removably tighten the cover (10) around said at least a portion of the turbine filter cassette (2).

3. The coalescence prefilter element (1) according to claim 1 or 2, further comprising a fixation means (16) configured to removably tighten the cover (10) around said at least a portion of the turbine filter cassette (2) after the cover has been placed around the at least a portion of the turbine filter cassette.

4. The coalescence prefilter element (1) according to any preceding claim, wherein each said sheet of coalescence filter material (11, 12) has a thickness of more than 1 mm but not more than 10 mm according to ISO 9073-2.

5. The coalescence prefilter element (1) according to any preceding claim, wherein said at least two sheets of connecting material (13, 14) have an efficiency rating of at least G3 according to EN 779:2009.

6. The coalescence prefilter element (1) according to any preceding claim, wherein said at least two sheets of connecting material (13, 14) are attached to said at least two sheets of coalescence filter material (11, 12) by a sewed seam (15).

7. The coalescence prefilter element (1) according to any preceding claim, wherein said at least two sheets of connecting material (13, 14) comprise a textile.

8. A combination filter (3), comprising
- a coalescence prefilter element (1) according to one of the preceding claims; and
- a turbine filter cassette (2) comprising an inlet (21, 22) and an outlet (23) for a fluid (50) to be cleaned and a processing filter element (27) arranged between the inlet (21, 22) and the outlet (23),
- wherein the cover (10) is imposed on and removably attached around at least a portion of the turbine filter cassette (2) so that the at least two sheets of coalescence filter material (11, 12) covers at least part of the inlet (21, 22) of the turbine filter cassette (2).

9. The combination filter (3) according to claim 8, wherein the coalescence prefilter element (1) and the processing filter element (27) are arranged such that the fluid (50) sequentially flows through the sheets of coalescence filter material (11, 12), enters the inlet (21, 22) of the turbine filter cassette, flows through the processing filter element (2), and exits the turbine filter cassette (2) through the outlet (23).

10. The combination filter (3) according to claim 9 or 10, wherein the turbine filter cassette (2) is V-shaped, and the inlet (21, 22) is arranged on at least one of the opposite sides (2L, 2R) of the V of the V-shaped filter cassette (2), and the cover (10) is arranged to cover at least part of the opposite sides (2L, 2R) of the V-shaped turbine filter cassette (2).

11. The combination filter according to claim 10, comprising
- a panel (4) having a plurality of V-shaped turbine filter cassettes (2-1, 2-2), wherein each of the turbine filter cassettes comprises at least one inlet (21, 22) which is arranged on at least one of the opposite sides (2L, 2R) of the V of the respective V-shaped filter cassette (2-1, 2-2),
- wherein the plurality of V-shaped turbine filter cassettes (2-1, 2-2) are arranged adjacent to one another with one of the sides (2L, 2R) of the V of a respective filter cassette facing (2-1) one of the sides (2L, 2R) of the V of an adjacent filter cassette (2-2),
- a plurality of coalescence prefilter elements (1), wherein the cover (10) of a respective coalescence prefilter element (1) is imposed on and removably attached around at least a portion of a respective turbine filter cassette (2-1, 2-2) in the form of a bag-like or tube-like envelope so that the at least two sheets of coalescence filter material (11, 12) cover at least part of the inlet (21, 22) of the respective turbine filter cassette (2-1, 2-2).

## Patentansprüche

1. Koaleszenz-Vorfilterelement (1), das zur Befestigung an einer Turbinenfilterkassette (2) konfiguriert ist, umfassend
- mindestens zwei Lagen Koaleszenzfiltermaterial (11, 12) zur Anordnung an einem Einlass (21,22) einer Turbinenfilterkassette (2), und
- eine Abdeckung (10), die dazu konfiguriert ist, um mindestens einen Abschnitt der Turbinenfilterkassette angebracht zu werden, wobei die Abdeckung (10) durch die mindestens zwei Lagen Koaleszenzfiltermaterial (11, 12) und mindestens zwei Lagen eines separaten Verbindungsmaterials (13, 14) gebildet wird, die jeweils zwischen den mindestens zwei Lagen Koaleszenzfiltermaterial (11, 12) auf gegenüberliegenden Seiten angeordnet sind, um eine schlauch- oder beutelartige Hülle zu bilden,
- wobei die Abdeckung (10) dazu konfiguriert ist, auf dem mindestens einen Abschnitt der Turbinenfilterkassette (2) aufgesetzt und abnehmbar um diese befestigt zu werden.

2. Koaleszenz-Vorfilterelement (1) nach Anspruch 1, wobei jede Lage Verbindungsmaterial (13, 14) ein elastisches Material umfasst, das dazu konfiguriert ist, die Abdeckung (10) abnehmbar um den mindestens einen Abschnitt der Turbinenfilterkassette (2) festzuziehen.

3. Koaleszenz-Vorfilterelement (1) nach Anspruch 1 oder 2, ferner umfassend ein Befestigungsmittel (16) , das dazu konfiguriert ist, die Abdeckung (10) lösbar um mindestens einen Abschnitt der Turbinenfilterkassette (2) festzuziehen, nachdem die Abdeckung um den mindestens einen Abschnitt der Turbinenfilterkassette platziert worden ist.

4. Koaleszenz-Vorfilterelement (1) nach einem der vorhergehenden Ansprüche, wobei jede Lage Koaleszenzfiltermaterial (11, 12) eine Dicke von mehr als 1 mm, jedoch nicht mehr als 10 mm gemäß ISO 9073-2 aufweist.

5. Koaleszenz-Vorfilterelement (1) nach einem der vorhergehenden Ansprüche, wobei die mindestens zwei Lagen Verbindungsmaterial (13, 14) eine Effizienzbewertung von mindestens G3 gemäß EN 779:2009 aufweisen.

6. Koaleszenz-Vorfilterelement (1) nach einem der vorhergehenden Ansprüche, wobei die mindestens zwei Lagen Verbindungsmaterial (13, 14) durch eine Nähnaht (15) an den mindestens zwei Lagen Koaleszenzfiltermaterial (11, 12) befestigt sind.

7. Koaleszenz-Vorfilterelement (1) nach einem der vorhergehenden Ansprüche, wobei die mindestens zwei Lagen Verbindungsmaterial (13, 14) ein Gewebe umfassen.

8. Kombinationsfilter (3), umfassend
- ein Koaleszenz-Vorfilterelement (1) nach einem der vorhergehenden Ansprüche; und
- eine Turbinenfilterkassette (2), die einen Einlass (21, 22) und einen Auslass (23) für ein zu reinigendes Fluid (50) und ein zwischen dem Einlass (21, 22) und dem Auslass (23) angeordnetes Aufbereitungsfilterelement (27) umfasst,
- wobei die Abdeckung (10) auf mindestens einem Abschnitt der Turbinenfilterkassette (2) aufgesetzt ist und abnehmbar um diese befestigt ist, so dass die mindestens zwei Lagen Koaleszenzfiltermaterial (11, 12) mindestens einen Teil des Einlasses (21, 22) der Turbinenfilterkassette (2) abdecken.

9. Kombinationsfilter (3) nach Anspruch 8, wobei das Koaleszenz-Vorfilterelement (1) und das Aufbereitungsfilterelement (27) so angeordnet sind, dass das Fluid (50) nacheinander durch die Lagen Koaleszenzfiltermaterial (11, 12) fließt, in den Einlass (21, 22) der Turbinenfilterkassette eintritt, durch das Prozessfilterelement (2) fließt und die Turbinenfilterkassette (2) durch den Auslass (23) verlässt.

10. Kombinationsfilter (3) nach Anspruch 9 oder 10, wobei die Turbinenfilterkassette (2) V-förmig ist und der Einlass (21, 22) auf mindestens einer der gegenüberliegenden Seiten (2L, 2R) des V der V-förmigen Filterkassette (2) angeordnet ist und die Abdeckung (10) dazu angeordnet ist, zumindest einen Teil der gegenüberliegenden Seiten (2L, 2R) der V-förmigen Turbinenfilterkassette (2) abzudecken.

11. Kombinationsfilter nach Anspruch 10, umfassend
- ein Panel (4) mit mehreren V-förmigen Turbinenfilterkassetten (2-1, 2-2),
wobei jede der Turbinenfilterkassetten mindestens einen Einlass (21, 22) umfasst, der an mindestens einer der gegenüberliegenden Seiten (2L, 2R) des V der jeweiligen V-förmigen Filterkassette (2-1, 2-2) angeordnet ist,
- wobei die mehreren V-förmigen Turbinenfilterkassetten (2-1, 2-2) nebeneinander angeordnet sind, wobei eine der Seiten (2L, 2R) des V einer jeweiligen Filterkassette (2-1) einer der Seiten (2L, 2R) des V einer benachbarten Filterkassette (2-2) zugewandt ist,
- mehrere Koaleszenz-Vorfilterelemente (1), wobei die Abdeckung (10) eines jeweiligen Koaleszenz-Vorfilterelements (1) auf mindestens einem Abschnitt einer jeweiligen Turbinenfilterkassette (2-1, 2-2) in der Form einer beutel- oder schlauchartigen Hülle aufgesetzt und abnehmbar um diese befestigt ist, so dass die mindestens zwei Lagen Koaleszenzfiltermaterial (11, 12) zumindest einen Teil des Einlasses (21, 22) der jeweiligen Turbinenfilterkassette (2-1, 2-2) abdecken.

## Revendications

1. Elément préfiltrant de coalescence (1) conçu pour être fixé à une cassette de filtre de turbine (2), comprenant
- au moins deux feuilles de matériau de filtre de coalescence (11, 12) destinées à être agencées au niveau d'une entrée (21, 22) d'une cassette de filtre de turbine (2), et
- un couvercle (10) conçu pour être fixé autour d'au moins une partie de la cassette de filtre de turbine, ledit couvercle (10) étant formé par lesdites au moins deux feuilles de matériau de filtre de coalescence (11, 12) et au moins deux feuilles d'un matériau de liaison séparé (13, 14), chacune agencée entre les au moins deux feuilles de matériau de filtre de coalescence (11, 12) sur des côtés opposés, pour former une enveloppe en forme de tube ou de sac,
- ledit couvercle (10) étant conçu pour être imposé sur ladite au moins une partie de la cassette de filtre de turbine (2) et pour être fixé de manière amovible autour de celle-ci.

2. Elément préfiltrant de coalescence (1) selon la revendication 1, chacune desdites feuilles de matériau de liaison (13, 14) comprenant un matériau élastique conçu pour serrer de manière amovible le couvercle (10) autour de ladite au moins une partie de la cassette de filtre de turbine (2).

3. Elément préfiltrant de coalescence (1) selon la revendication 1 ou 2, comprenant en outre un moyen de fixation (16) conçu pour serrer de manière amovible le couvercle (10) autour de ladite au moins une partie de la cassette de filtre de turbine (2) après que le couvercle a été placé autour de la au moins une partie de la cassette de filtre de turbine.

4. Elément préfiltrant de coalescence (1) selon une quelconque revendication précédente, chaque feuille de matériau de filtre de coalescence (11, 12) comportant une épaisseur supérieure à 1 mm mais pas supérieure à 10 mm selon la norme ISO 9073-2.

5. Elément préfiltrant de coalescence (1) selon une quelconque revendication précédente, lesdites au moins deux feuilles de matériau de liaison (13, 14) comportant un indice d'efficacité d'au moins G3 selon la norme EN 779:2009.

6. Elément préfiltrant de coalescence (1) selon une quelconque revendication précédente, lesdites au moins deux feuilles de matériau de liaison (13, 14) étant fixées auxdites au moins deux feuilles de matériau de filtre de coalescence (11, 12) par une couture cousue (15).

7. Elément préfiltrant de coalescence (1) selon une quelconque revendication précédente, lesdites au moins deux feuilles de matériau de liaison (13, 14) comprenant un textile.

8. Combinaison filtre (3), comprenant
- un élément préfiltrant de coalescence (1) selon l'une des revendications précédentes ; et
- une cassette de filtre de turbine (2) comprenant une entrée (21, 22) et une sortie (23) pour un fluide (50) à nettoyer et un élément filtrant de traitement (27) agencé entre l'entrée (21, 22) et la sortie (23),
- ledit couvercle (10) étant imposé sur au moins une partie de la cassette de filtre de turbine (2) et fixé de manière amovible autour de celle-ci afin que les au moins deux feuilles de matériau de filtre de coalescence (11, 12) recouvrent au moins une partie de l'entrée (21, 22) de la cassette de filtre de turbine (2).

9. Combinaison filtre (3) selon la revendication 8, ledit élément préfiltrant de coalescence (1) et ledit élément filtrant de traitement (27) étant agencés de sorte que le fluide (50) s'écoule séquentiellement à travers les feuilles de matériau de filtre de coalescence (11, 12), pénètre dans l'entrée (21, 22) de la cassette de filtre de turbine, s'écoule à travers l'élément filtrant de traitement (2) et sorte de la cassette de filtre de turbine (2) par la sortie (23).

10. Combinaison filtre (3) selon la revendication 9 ou 10, ladite cassette de filtre de turbine (2) étant en forme de V, et ladite entrée (21, 22) étant agencée sur au moins l'un des côtés opposés (2L, 2R) du V de la cassette de filtre en forme de V (2), et ledit couvercle (10) étant agencé pour recouvrir au moins une partie des côtés opposés (2L, 2R) de la cassette de filtre de turbine en forme de V (2).

11. Combinaison filtre selon la revendication 10, comprenant
- un panneau (4) comportant une pluralité de cassettes de filtre de turbine en forme de V (2-1, 2-2), chacune des cassettes de filtre de turbine comprenant au moins une entrée (21, 22) qui est agencée sur au moins un des côtés opposés (2L, 2R) du V de la cassette de filtre en forme de V respective (2-1, 2-2),
- ladite pluralité de cassettes de filtre de turbine en forme de V (2-1, 2-2) étant agencées adjacentes les unes aux autres avec l'un des côtés (2L, 2R) du V d'une cassette de filtre respective faisant face (2-1) à l'un des côtés (2L, 2R) du V d'une cassette de filtre adjacente (2-2),
- une pluralité d'éléments préfiltrant de coalescence (1), ledit couvercle (10) d'un élément préfiltrant de coalescence respectif (1) étant imposé sur au moins une partie d'une cassette de filtre de turbine respective (2-1, 2-2) et fixé de manière amovible autour de celle-ci, dans la forme d'une enveloppe en forme de sac ou de tube afin que les au moins deux feuilles de matériau de filtre de coalescence (11, 12) recouvrent au moins une partie de l'entrée (21, 22) de la cassette de filtre de turbine respective (2-1, 2-2).
